# EUROPEAN PATENT SPECIFICATION

(11) **EP 4 368 423 B1**
(45) Date of publication and mention of the grant of the patent: **06.11.2024**
(21) Application number: 23208526.6
(22) Date of filing: 08.11.2023
(51) Int. Cl.: B62K 25/28, B60G 17/016, B60G 17/06, B60G 17/08, B62K 25/04, B62K 25/08

(54) **STRADDLED VEHICLE**
GRÄTSCHSITZFAHRZEUG
VÉHICULE À SELLE

(30) Priority: 08.11.2022 JP 2022178691
(43) Date of publication of application: 15.05.2024
(73) Proprietor: Yamaha Hatsudoki Kabushiki Kaisha, Iwata-shi, Shizuoka-ken 438-8501 (JP)
(72) Inventor: Nakamura, Shota, Iwata-shi, Shizuoka-ken, 438-8501 (JP); Nakahara, Shigenori, Iwata-shi, Shizuoka-ken, 438-8501 (JP); Endo, Akiyoshi, Iwata-shi, Shizuoka-ken, 438-8501 (JP); Murata, Masaaki, Iwata-shi, Shizuoka-ken, 438-8501 (JP)
(74) Representative: Grünecker Patent- und Rechtsanwälte PartG mbB

(56) References cited:
- JP-A- 2010 179 876

## Description

The present invention relates to a straddled vehicle that includes an electronically controlled suspension capable of adjusting a damping force and to a method for controlling a damping force applied by an electronically controlled suspension of a straddled vehicle.

Conventionally, straddled vehicles that include an electronically controlled suspension capable of adjusting a damping force by electronic control have been known. For example, JP 2010-179876 A discloses a motorcycle including a front fork and a rear suspension each being constituted of an electronically controlled suspension.

When power is not supplied to an electronically controlled suspension, a damping force of the electronically controlled suspension is relatively large. The damping force of the electronically controlled suspension can be reduced by supplying an electrical signal to the electronically controlled suspension, and thus, adjustment of the damping force is allowed. For example, by adjusting the damping force of the electronically controlled suspension in accordance with a driving state of the motorcycle, riding comfort of the motorcycle can be increased.

When a rider drives a motorcycle, the rider first turns on a main switch, and then, starts an engine. After starting the engine, the rider increases an output of the engine by operating an accelerator grip to start traveling. In a typical known motorcycle, power supply to an electronically controlled suspension is started at the same time as starting an engine. Therefore, after a main switch is turned on, a damping force of the electronically controlled suspension is large until the engine is started.

Incidentally, the rider puts a side stand of the motorcycle up before starting the engine and performs an operation of changing a posture of a vehicle body from an inclined posture to a vertical posture in some cases. In such a case, when the damping force of the electronically controlled suspension is large, it is difficult to perform the operation of changing the posture of the vehicle body to the vertical posture. In other cases, before starting the engine, the rider moves the parked motorcycle to a spacious place suitable for the rider to ride the motorcycle. In such a case, the rider stands on a side of the motorcycle holding a handlebar to move the motorcycle from a parking space by pulling the motorcycle and move the motorcycle to a riding place by pushing the motorcycle. In this case, when the damping force of the electronically controlled suspension is large, it is difficult to perform an operation of moving the motorcycle.

In view of the forgoing, it is the object of the present invention to provide a straddled vehicle that includes an electronically controlled suspension to provide a method for controlling a damping force applied by an electronically controlled suspension of a straddled vehicle which allows easily changing a posture of the straddled vehicle or moving the straddled vehicle before a traveling drive device starts.

According to the present invention said object is solved by a straddled vehicle having the features of independent claim 1. Moreover, according to the present invention said object is solved by a method for controlling a damping force applied by an electronically controlled suspension of a straddled vehicle having the features of independent claim 13. Preferred embodiments are laid down in the dependent claims.

A straddled vehicle disclosed herein includes a vehicle body frame, a traveling drive device supported by the vehicle body frame, a wheel supported by the vehicle body frame, an electronically controlled suspension provided between the vehicle body frame and the wheel, a power source that supplies power, a main switch that turns on and off supply of power of the power source, a vehicle speed detection device that detects a vehicle speed, an operation detection device that detects whether the traveling drive device is running, and a control device that controls a damping force of the electronically controlled suspension. The control device is configured to, when the main switch is on, the vehicle speed detected by the vehicle speed detection device is equal to or lower than a preset first threshold, and the operation detection device detects that the traveling drive device is not running, controls the damping force of the electronically controlled suspension by supplying power to the electronically controlled suspension such that the damping force is a first value. The control device is configured to, when the main switch is on, the vehicle speed detected by the vehicle speed detection device is equal to or lower than the first threshold, and the operation detection device detects that the traveling drive device is running, control the damping force of the electronically controlled suspension such that the damping force is a second value that is larger than the first value.

According to the straddled vehicle, upon turning on the main switch, although the traveling drive device is not running, when the vehicle speed is equal to or lower than the first threshold, power is supplied to the electronically controlled suspension and the damping force of the electronically controlled suspension is controlled to be the first value. The first value is smaller than the second value (that is, a damping force when the drive device is running) and is a relatively small value. Therefore, the damping force of the electronically controlled suspension is relatively small. Accordingly, after turning on the main switch, a rider can easily perform an operation of changing a posture of the straddled vehicle from an inclined posture to a vertical posture before starting the traveling drive device. Moreover, pushing and pulling the straddled vehicle is facilitated, so that the rider can easily move the straddled vehicle before riding on the straddled vehicle. When the traveling drive device is running, the damping force of the electronically controlled suspension is controlled to be the second value, and is thus relatively large. Therefore, the rider can easily keep the posture of the straddled vehicle and can stably start traveling. Moreover, when the rider stops the straddled vehicle that is traveling, the rider can easily keep the posture of the straddled vehicle immediately before stopping and can stably stop the straddled vehicle.

The control device may be configured to, when the main switch is on, the vehicle speed detected by the vehicle speed detection device is larger than the first threshold, and the operation detection device detects that the traveling drive device is not running, control the damping force of the electronically controlled suspension such that the damping force is a third value that is larger than the first value.

Thus, when the traveling drive device stops during traveling at a higher vehicle speed than the first threshold, the damping force of the electronically controlled suspension is kept at the third value that is relatively large. Therefore, it is possible to prevent a characteristic of the electronically controlled suspension from suddenly becoming soft when the traveling drive device is running. Accordingly, when the traveling drive device stops while the straddled vehicle is traveling, reduction of riding comfort can be suppressed.

There is no particular limitation on a magnitude relation between the second value and the third value. The third value may be larger than the second value. Thus, when the traveling drive device stops while the straddled vehicle is traveling, traveling stability is high and excellent riding comfort is ensured.

The control device may be configured to, when the main switch is on, the vehicle speed detected by the vehicle speed detection device is larger than the first threshold and is equal to or lower than a second threshold that is larger than the first threshold, and the operation detection device detects that the traveling drive device is running, control the damping force of the electronically controlled suspension such that the damping force is a fourth value that is larger than the first value.

Thus, in middle of deceleration before the straddled vehicle stops traveling (for example, immediately before stopping because of a red light), when the vehicle speed is equal to or lower than the second threshold, it is possible to prevent the damping force of the electronically controlled suspension from becoming small. The rider can cause the straddled vehicle to stably travel in the middle of deceleration before the straddled vehicle stops.

The fourth value may be a constant value, and may be also a variable that varies based on the vehicle speed. The fourth value may be set to decrease as the vehicle speed increases in a range in which the vehicle speed detected by the vehicle speed detection device is larger than the first threshold and is equal to or lower than the second threshold.

There is no particularly limitation on a magnitude relation between the third value and the fourth value. The third value may be larger than the fourth value.

The control device may be configured to, when the main switch is on, the vehicle speed detected by the vehicle speed detection device is larger than the second threshold, and the operation detection device detects that the traveling drive device is running, control the damping force of the electronically controlled suspension such that the damping force is a fifth value that is smaller than the fourth value.

Thus, when the straddled vehicle is traveling at a higher speed than the second threshold, the damping force of the electronically controlled suspension is smaller than that when the straddled vehicle is traveling at a speed equal to or lower than the second threshold. When the straddled vehicle is traveling at a relatively high speed, the damping force of the electronically controlled suspension is controlled to be small. Therefore, when the straddled vehicle is traveling at a relatively high speed, impact received from a road surface is easily absorbed and riding comfort is increased.

There is no particular limitation on the first threshold, but the first threshold may be a speed of 0 to 10 km/h.

There is no particular limitation on the second threshold, but the second threshold may be a speed of 10 to 20 km/h.

The traveling drive device may be an internal combustion engine. The operation detection device may include a rotational speed sensor that detects a rotational speed of the internal combustion engine.

Thus, it is possible to detect based on the rotational speed of the internal combustion engine whether the internal combustion engine is running.

The wheel may be a front wheel, and the electronically controlled suspension may be an electronically controlled front suspension. The front suspension may be configured to apply a first damping force when expanding with power supplied thereto and a second damping force when expanding with no power supplied thereto, the first damping force being smaller than the second damping force. The front suspension may be configured to apply a third damping force when contracting with power supplied thereto and a fourth damping force when contracting with no power supplied thereto, the third damping force being smaller than the fourth damping force.

Thus, when the main switch is turned on, both the damping forces of the front suspension when expanding and when contracting are small, so that an operation of changing a posture of a vehicle body from an inclined posture to a vertical posture and an operation of pushing or pulling the straddled vehicle can be easily performed.

The wheel may be a rear wheel, and the electronically controlled suspension may be an electronically controlled rear suspension. The rear suspension may be configured to apply a first damping force when expanding with power supplied thereto and a second damping force when expanding with no power supplied thereto, the first damping force being smaller than the second damping force. The rear suspension may be configured to apply a third damping force when contracting with power supplied thereto and a fourth damping force when contracting with no power supplied thereto, the third damping force being smaller than the fourth damping force.

Thus, when the main switch is turned on, both the damping forces of the rear suspension when expanding and when contracting are small, so that the operation of changing the posture of the vehicle body from an inclined posture to a vertical posture and the operation of pushing or pulling the straddled vehicle can be easily performed.

### ADVANTAGES OF THE INVENTION

According to the present teaching, a straddled vehicle that include an electronically controlled suspension and allows easily changing a posture of the straddled vehicle or moving the straddled vehicle before a traveling drive device starts can be provided.

### BRIEF DESCRIPTION OF THE DRAWINGS

FIG. 1 is a side view of a motorcycle according to an embodiment.
FIG. 2 is a diagram illustrating a configuration of a front fork.
FIG. 3 is a diagram illustrating a configuration of a rear suspension.
FIG. 4 is a diagram illustrating a configuration of a control system.
FIG. 5 is a graph illustrating a relationship between a vehicle speed and a damping force of the front fork.

### DESCRIPTION OF EMBODIMENTS

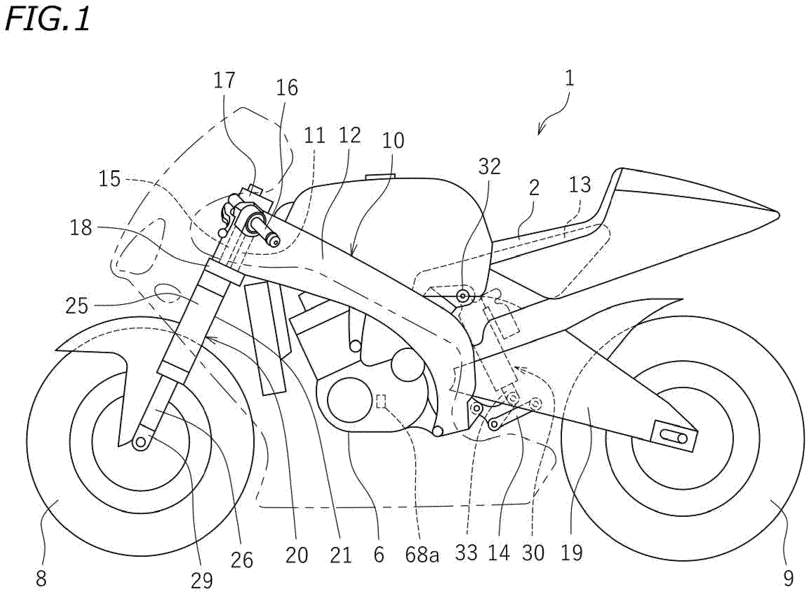

With reference to the attached drawings, one embodiment of a straddled vehicle will be described below. As illustrated in FIG. 1, a straddled vehicle according to this embodiment is a motorcycle 1.

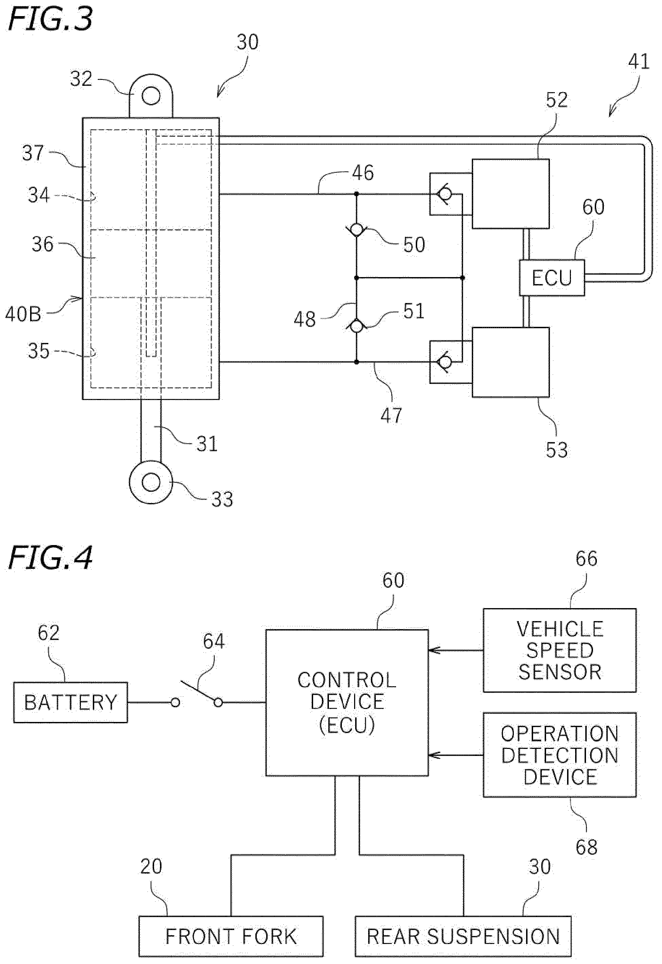

The motorcycle 1 includes a vehicle body frame 10, a seat 2 supported by the vehicle body frame 10, an internal combustion engine (which will be hereinafter referred to as an engine) 6 supported by the vehicle body frame 10, a front wheel 8 and a rear wheel 9 supported by the vehicle body frame 10, a front fork 20 provided between the vehicle body frame 10 and the front wheel 8, a rear suspension 30 provided between the vehicle body frame 10 and the rear wheel 9, and a control device 60 (see FIG. 4).

The vehicle body frame 10 includes a head pipe 11, a main frame 12 extending rearward from the head pipe 11, and a seat frame 13 extending rearward from the main frame 12. The seat 2 is supported by the seat frame 13.

A steering shaft 15 is rotatably inserted in the head pipe 11. A handlebar 16 is mounted on an upper end portion of the steering shaft 15. An upper bracket 17 is fixed to the upper end portion of the steering shaft 15. An under bracket 18 is fixed to a lower end portion of the steering shaft 15.

The engine 6 is an example of a traveling drive device. However, the drive device is not limited to the engine 6. The drive device may include an electric motor. The drive device may include both of an internal combustion engine and an electric motor.

The front wheel 8 is supported by the head pipe 11 of the vehicle body frame 10 via the front fork 20. The rear wheel 9 is supported by the main frame 12 of the vehicle body frame 10 via a rear arm 19. A front end portion of the rear arm 19 is slidably connected to the main frame 12 via an unillustrated pivot shaft. A rear end portion of the rear arm 19 is connected to the rear wheel 9. The rear wheel 9 is connected to the engine 6 via a power transmission member (not illustrated), such as a chain of the like. The rear wheel 9 is a drive wheel and receives a driving force of the engine 6 to rotate.

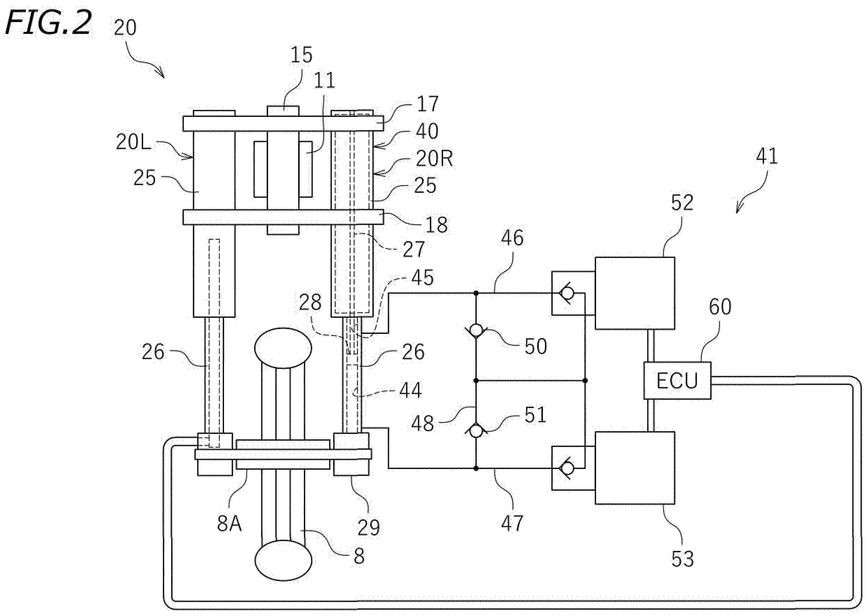

The front fork 20 is an example of an electronic controlled suspension. Note that the electronic controlled suspension is a suspension in which damping force characteristics are adjusted by electronic control. As illustrated in FIG. 2, the front fork 20 is fixed to the upper bracket 17 and the under bracket 18. The front fork 20 includes a left tube 20L and a right tube 20R.

Each of the left tube 20L and the right tube 20R includes an outer tube 25 and an inner tube 26. The outer tube 25 is mounted to the upper bracket 17 and the under bracket 18. A lower end portion of the inner tube 26 is joined to an axle 8A of the front wheel 8 via an axle bracket 29. The inner tube 26 is slidably inserted inside the outer tube 25. The inner tube 26 slides against the outer tube 25, so that the front fork 20 expands and contracts. In this embodiment, when the inner tube 26 moves downward with respect to the outer tube 25, the front fork 20 expands. When the inner tube 26 moves upward with respect to the outer tube 25, the front fork 20 contracts. Downward and upward correspond to an expansion direction and a contraction direction of the front fork 20, respectively.

The right tube 20R includes an oil-type shock absorber 40 that is electronically controlled. The shock absorber 40 includes the inner tube 26, a rod 27, a piston 28, and a control valve assembly 41. The rod 27 is undisplaceably fixed to the outer tube 25. The piston 28 is connected to a lower end portion of the rod 27. The piston 28 is arranged inside the inner tube 26. An inner space of the inner tube 26 is partitioned into an oil chamber 44 and an oil chamber 45 by the piston 28.

The control valve assembly 41 is connected to the oil chamber 44 and the oil chamber 45. The control valve assembly 41 includes oil paths 46 to 48, check valves 50 and 51, and electronically controlled piston valves 52 and 53. The check valve 50 is arranged between the oil path 46 and the oil path 48. The check valve 50 allows a flow of oil from the oil path 48 to the oil path 46 and prohibits a flow of oil from the oil path 46 to the oil path 48. The check valve 51 is arranged between the oil path 47 and the oil path 48. The check valve 51 allows a flow of oil from the oil path 48 to the oil path 47 and prohibits a flow of oil from the oil path 47 to the oil path 48. The piston valve 52 connects the oil path 46 and the oil path 48. The piston valve 52 allows a flow of oil from the oil path 46 to the oil path 48 and prohibits a flow of oil from the oil path 48 to the oil path 46. The piston valve 53 connects the oil path 47 and the oil path 48. The piston valve 53 allows a flow of oil from the oil path 47 to the oil path 48 and prohibits a flow of oil from the oil path 48 to the oil path 47. Each of the piston valves 52 and 53 is constituted of, for example, a solenoid valve.

When oil flows through the piston valve 52, the oil receives a flow resistance. Degree of the flow resistance caused by the piston valve 52 is controlled by the control device 60. When the control device 60 increases the flow resistance of the piston valve 52, the oil receives more resistance as the oil flows from the oil path 46 to the oil path 48. Thus, the oil is difficult to flow from the oil chamber 45 to the oil chamber 44 through the control valve assembly 41, so that a damping force of the front fork 20 in the expansion direction is increased. Conversely, when the control device 60 reduces the flow resistance of the piston valve 52, the damping force of the front fork 20 in the expansion direction is reduced.

When the oil flows through the piston valve 53, the oil receives a flow resistance. Degree of the flow resistance caused by the piston valve 53 is controlled by the control device 60. When the control device 60 increases the flow resistance of the piston valve 53, the oil receives more resistance as the oil flows from the oil path 47 to the oil path 48. Thus, the oil is difficult to flow from the oil chamber 44 to the oil chamber 45 through the control valve assembly 41, so that a damping force of the front fork 20 in the contraction direction is increased. Conversely, when the control device 60 reduces the flow resistance of the piston valve 53, the damping force of the front fork 20 in the contraction direction is reduced.

As illustrated in FIG. 1, an upper end portion 32 of the rear suspension 30 is connected to a bracket 12a fixed to the main frame 12. A lower end portion 33 of the rear suspension 30 is connected to a joining member 14 fixed to the rear arm 19. The rear suspension 30 is indirectly connected to the vehicle body frame 10 and the rear wheel 9.

The rear suspension 30 is another example of the electronically controlled suspension. As illustrated in FIG. 3, the rear suspension 30 includes an oil-type shock absorber 40B that is electronically controlled. The shock absorber 40B includes a cylinder 37, a piston 36 slidably arranged inside the cylinder 37, and a rod 31 extending from the piston 36. An internal space of the cylinder 37 is partitioned into an oil chamber 34 and an oil chamber 35 by the piston 36. When the piston 36 moves downward, the rear suspension 30 expands. When the piston 36 moves upward, the rear suspension 30 contracts. Downward and upward correspond to an expansion direction and a contraction direction of the rear suspension 30, respectively.

The rear suspension 30 includes a control valve assembly 41 that is similar to the control valve assembly 41 of the front fork 20. Each member that is similar to a corresponding member of the control valve assembly 41 of the front fork 20 will be denoted below by the same reference character as that of the corresponding member of the control valve assembly 41 and description thereof will be omitted. In the rear suspension 30, the oil path 46 of the control valve assembly 41 is connected to the oil chamber 34. The oil path 47 of the control valve assembly 41 is connected to the oil chamber 35.

When the control device 60 increases the flow resistance of the piston valve 52, the oil is difficult to flow from the oil chamber 34 to the oil chamber 35 through the control valve assembly 41, so that a damping force of the rear suspension 30 in the contraction direction is increased. Conversely, when the control device 60 reduces the flow resistance of the piston valve 52, the damping force of the rear suspension 30 in the contraction direction is reduced.

When the control device 60 increases the flow resistance of the piston valve 53, the oil is difficult to flow from the oil chamber 35 to the oil chamber 34 through the control valve assembly 41, so that a damping force of the rear suspension 30 in the expansion direction is increased. Conversely, when the control device 60 reduces the flow resistance of the piston valve 53, the damping force of the rear suspension 30 in the expansion direction is reduced.

FIG. 4 is a diagram illustrating a configuration of a control system of the motorcycle 1. The motorcycle 1 includes a battery 62 as an example of a power source that supplies power, a main switch 64, a vehicle speed sensor 66, and an operation detection device 68 that detects whether the engine 6 is running. Note that the engine 6 includes an unillustrated generator. While the engine 6 is running, the generator also functions as a power source.

The control device 60 is an electronic control unit and is configured of a microcomputer including unillustrated CPU, RAM, ROM, or the like. The control device 60 is connected to the battery 62 via the main switch 64. When the main switch 64 is turned on, power is supplied from the battery 62 to the control device 60. When the main switch 64 is turned off, power supply from the battery 62 to the control device 60 is shut off.

A vehicle speed sensor 66 and an operation detection device 68 are connected to the control device 60. In this embodiment, the operation detection device 68 is constituted of a rotational speed sensor 68a (see FIG. 1) that detects rotational speed of a crank shaft of the engine 6. Based on that the rotational speed of the crank shaft is larger than zero, it is detected that the engine 6 is running. However, it is sufficient that the operation detection device 68 is a device that can detect the running of the engine 6 and there is no particular limitation at all on a form thereof. The operation detection device 68 may be a device that detects an operation of an injector or an ignition device of the engine 6.

The control device 60 is connected to the front fork 20 and the rear suspension 30 and controls the front fork 20 and the rear suspension 30. Specifically, the control device 60 is connected to the piston valves 52 and the piston valves 53 of the front fork 20 and the rear suspension 30 (see FIG. 2 and FIG. 3) and adjusts the flow resistances of the piston valves 52 and the piston valves 53. Thus, characteristics of the damping forces of the front fork 20 and the rear suspension 30 are adjusted. The control device 60 controls the damping forces of the front fork 20 and the rear suspension 30 in the expansion direction and the contraction direction.

In this embodiment, when power is not supplied to the piston valve 52 and the piston valve 53, each of the flow resistances of the oil in the piston valve 52 and the piston valve 53 is maximum. As an amount of power supplied to each of the piston valve 52 and the piston valve 53 increases, each of the flow resistances of the oil in the piston valve 52 and the piston valve 53 reduces. When power is not supplied to each of the front fork 20 and the rear suspension 30, each of the damping forces of the front fork 20 and the rear suspension 30 is maximum, and as an amount of power supplied to each of the front fork 20 and the rear suspension 30 increases, a corresponding one of the damping forces of the front fork 20 and the rear suspension 30 reduces. The control device 60 is configured to execute control in which each of the damping forces of the front fork 20 and the rear suspension 30 when power is supplied thereto is reduced to a smaller level than a corresponding one of the damping forces of the front fork 20 and the rear suspension 30 when power is not supplied.

Specifically, the damping force of the front fork 20 when, with power supplied to the front fork 20, the piston 28 moves downward is smaller than the damping force of the front fork 20 when, with power not supplied to the front fork 20, the piston 28 moves downward. The damping force of the front fork 20 when, with power supplied to the front fork 20, the piston 28 moves upward is smaller than the damping force of the front fork 20 when, with power not supplied to the front fork 20, the piston 28 moves upward. As described above, when power is supplied to the front fork 20, each of the damping forces of the front fork 20 in the expansion direction and the contraction direction is reduced.

The damping force of the rear suspension 30 when the piston 36 moves downward with power supplied to the rear suspension 30 is smaller than the damping force of the rear suspension 30 when the piston 36 moves downward with power not supplied to the rear suspension 30. The damping force of the rear suspension 30 when the piston 36 moves upward with power supplied to the rear suspension 30 is smaller than the damping force of the rear suspension 30 when the piston 36 moves upward with power not supplied to the rear suspension 30. As described above, when power is supplied to the rear suspension 30, each of the damping forces of the rear suspension 30 in the expansion direction and the contraction direction is reduced.

The configuration of the motorcycle 1 has been described above. Next, control executed by the control device 60 will be described.

The rider puts the side stand (not illustrated) of the motorcycle 1 up before the rider rides on the motorcycle 1 (specifically, before the rider straddles the seat 2) and performs an operation of changing a posture of the motorcycle 1 from an inclined posture to a vertical posture in some cases. Moreover, before riding on the motorcycle 1, the rider sometimes performs an operation of moving the motorcycle 1 from a parking space by pulling the motorcycle 1 and an operation of moving the motorcycle 1 to a riding place by pushing the motorcycle 1. With large damping forces of the front fork 20 and the rear suspension 30, an expansion operation and a contraction operation of each of the front fork 20 and the rear suspension 30 are stiff, so that it is difficult to cause the front fork 20 and the rear suspension 30 to expand and contract by an external force. Accordingly, it is not easy for the rider to perform those operations. That is, with large damping forces of the front fork 20 and the rear suspension 30, the rider cannot easily change the posture of the motorcycle 1 or move the motorcycle 1.

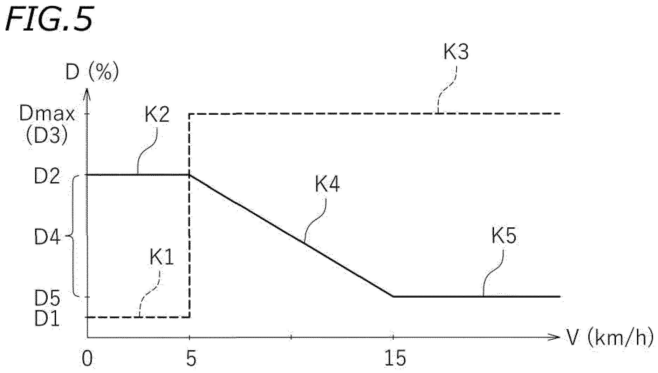

FIG. 5 is a graph illustrating a relationship between a vehicle speed V and a damping force D of the front fork 20 (which will be hereinafter referred to merely as a "damping force"). Although not illustrated, a relationship between the vehicle speed V and a damping force D of the rear suspension 30 is similar thereto. In this embodiment, the damping force D of each of the front fork 20 and the rear suspension 30 becomes a maximum Dmax when power is not supplied to the front fork 20 and the rear suspension 30. Herein, the damping force D is defined as a ratio with respect to the maximum Dmax. A solid line in FIG. 5 indicates a relationship between the vehicle speed V and the damping force D when the main switch 64 is on and the engine 6 is running. A broken line in FIG. 5 indicates a relationship between the vehicle speed V and the damping force D when the main switch 64 is on and the engine 6 is not running.

According to this embodiment, the control device 60 supplies power to the front fork 20 and the rear suspension 30 when the main switch 64 is on and the vehicle speed detected by the vehicle speed sensor 66 is equal to or lower than 5 km/h, and the operation detection device 68 detects that the engine 6 is not running. Thus, each of the damping forces of the front fork 20 and the rear suspension 30 is smaller than a corresponding one of the damping forces of the front fork 20 and the rear suspension 30 when power is not supplied thereto. Herein, the control device 60 controls the damping force D of each of the front fork 20 and the rear suspension 30 such that the damping force D is a first value D1 that is smaller than the maximum Dmax (see a broken line K1 in FIG. 5). There is no particular limitation on the first value, but the first value is, for example, 10% of the maximum. Thus, the rider can easily change the posture of the motorcycle 1 and move the motorcycle 1 before riding on the motorcycle 1. Note that the value of 5 km/h described above is an example of a first threshold. The first threshold is preferably a maximum of the vehicle speed when the rider pushes the motorcycle 1 to move the motorcycle 1, but there is no particular limitation on the value. The first threshold may be, for example, an arbitrary value in a range of 0 to 10 km/h.

When the rider starts the engine 6, the motorcycle 1 is enabled to travel. While the motorcycle 1 is traveling, it is preferable that the posture of the motorcycle 1 is stable. When the speed of the motorcycle 1 is zero or relatively low, the posture of the motorcycle 1 can be stabilized by keeping the damping forces of the front fork 20 and the rear suspension 30 relatively large. According to this embodiment, the control device 60 controls the damping force D of each of the front fork 20 and the rear suspension 30 such that the damping force D is a second value D2 that is larger than the first value D when the main switch 64 is on, the vehicle speed detected by the vehicle speed sensor 66 is equal to or lower than 5 km/h, and the operation detection device 68 detects that the engine 6 is running (see a solid line K2 in FIG. 5). There is no particular limitation on the second value, but the second value is, for example, 70% of the maximum Dmax. Thus, the rider can easily stabilize the posture of the motorcycle 1 after starting the engine 6, and can start traveling of the motorcycle 1 with a stable posture.

Incidentally, as another option, when the main switch 64 is on and it is detected that the engine 6 is not running, the damping force D of each of the front fork 20 and the rear suspension 30 is controlled to be the first value D1 regardless of the vehicle speed V. Thus, the rider can easily change the posture of the motorcycle 1 and move the motorcycle 1 before riding on the motorcycle 1. However, there can be cases where the engine 6 stops due to some failure while the motorcycle 1 is traveling. In such a case, the damping forces of the front fork 20 and the rear suspension 30 are suddenly reduced, riding comfort is reduced. Therefore, according to this embodiment, when the main switch 64 is on, the vehicle speed detected by the vehicle speed sensor 66 is larger than 5 km/h, and the operation detection device 68 detects that the engine 6 is not running, the control device 60 controls the damping force D of each of the front fork 20 and the rear suspension 30 such that the damping force D is a third value D3 that is larger than the first value D1 (see a broken line K3 in FIG. 5). Thus, even when the engine 6 stops during traveling, as long as the vehicle speed V is not equal to or lower than 5 km/h, the damping forces of the front fork 20 and the rear suspension 30 are high. Therefore, it is possible to avoid that the damping forces of the front fork 20 and the rear suspension 30 are suddenly reduced.

Herein, the control device 60 stops power supply to the front fork 20 and the rear suspension 30 when the main switch 64 is on, the vehicle speed detected by the vehicle speed sensor 66 is larger than 5 km/h, and the operation detection device 68 detects that the engine 6 is not running. Therefore, the third value D3 matches the maximum Dmax of the damping force D. In this specification, it is included in control of the front fork 20 and the rear suspension 30 by the control device 60 that power is not supplied to the front fork 20 and the rear suspension 30. Note that the third value D3 may not match the maximum Dmax and may be smaller than the maximum Dmax.

Moreover, according to this embodiment, when the main switch 64 is on, the vehicle speed detected by the vehicle speed sensor 66 is equal to or lower than 15 km/h, and the operation detection device 68 detects that the engine 6 is running, the control device 60 controls the damping force D of each of the front fork 20 and the rear suspension 30 such that the damping force D is a fourth value D4 that is larger than the first value D1 (see a solid line K4 in FIG. 5). The fourth value D4 may be a constant value, but is set to be a variable that varies based on the vehicle speed V in this embodiment. Herein, the fourth value D4 is set to reduce as the vehicle speed V increases in a range in which the vehicle speed V is 5 to 15 km/h. Thus, the rider can easily drive the motorcycle 1 in a suitable manner when traveling at a low speed. Note that the value of 15 km/h described above is an example of a second threshold, but there is no particular limitation on the second threshold. The second threshold may be larger than the first threshold. The second threshold may be, for example, an arbitrary value in a range of 10 to 20 km/h.

When the motorcycle 1 is traveling at a relatively high speed, the damping forces of the front fork 20 and the rear suspension 30 are preferably cause to be relatively small such that impact received from a road surface is easily absorbed. According to this embodiment, when the main switch 64 is on, the vehicle speed detected by the vehicle speed sensor 66 is larger than 15 km/h, and the operation detection device 68 detects that the engine 6 is running, the control device 60 controls the damping force D of each of the front fork 20 and the rear suspension 30 such that the damping force D is a fifth value D5 that is smaller than the fourth value D4 (see a solid line K5 in FIG. 5). Thus, impact from a road surface can be effectively absorbed and riding comfort of the motorcycle 1 is increased. There is no particular limitation on the fifth value D5, but is, for example, 15% of the maximum Dmax. The fifth value D5 may be equal to the first value D1 and may be different from the first value D1.

Note that, when the vehicle speed V is reduced to a level of 15 km/h or lower as the motorcycle 1 decelerates, the damping force D of each of the front fork 20 and the rear suspension 30 is increased from the fifth value D5 to the fourth value D4. When the vehicle speed V is further reduced to be equal to or lower than 5 km/h, the damping force D is increased from the fourth value D4 to the second value D2. Therefore, for example, when the motorcycle 1 stops in front of a red light, it is possible to avoid that the damping forces of the front fork 20 and the rear suspension 30 are suddenly reduced as decelerating. Accordingly, the posture of the motorcycle 1 immediately before stopping can be stabilized.

Next, various effects of the motorcycle 1 according to this embodiment will be described.

According to the motorcycle 1 of this embodiment, upon turning on the main switch 64 when the vehicle speed is equal to or lower than 5 km/h, power is supplied to the front fork 20 and the rear suspension 30 although the engine 6 is not running and the damping force D is controlled to be the first value D1. Thus, the damping forces of the front fork 20 and the rear suspension 30 are reduced. Accordingly, it is easier to cause the front fork 20 and the rear suspension 30 to expand and contract. Therefore, after the main switch 64 is turned on and before the engine 6 is started, the rider can easily perform the operation of changing the posture of the motorcycle 1 from an inclined posture to a vertical posture. It is also easier to push and pull the motorcycle 1, so that the rider can easily move the motorcycle 1 before riding on the motorcycle 1.

When the engine 6 is started, the damping force D of each of the front fork 20 and the rear suspension 30 is controlled to be the second value D2 and is thus relatively large. The damping force D of each of the front fork 20 and the rear suspension 30 is relatively small before the engine 6 is started, but the damping force D of each of the front fork 20 and the rear suspension 30 is relatively large after the engine 6 is started. After the engine 6 is started, the expansion operation and the contraction operation of each of the front fork 20 and the rear suspension 30 are stiff, so that the posture of the motorcycle 1 can be easily stabilized. The rider can start traveling of the motorcycle 1 with a stable posture. When the motorcycle 1 stops traveling, the posture of the motorcycle 1 immediately before stopping can be easily kept, so that the motorcycle 1 can stably stop.

Incidentally, there is a case where the engine 6 is stopped while the motorcycle 1 is traveling, that is, for example, a case where the rider presses a kill switch (not illustrated), a case where an engine stall occurs, or the like. When the engine 6 is stopped while the motorcycle 1 is traveling, a state where the main switch 64 is turned on and the engine 6 is not running is caused, although the motorcycle 1 is traveling. However, according to this embodiment, when the vehicle speed is higher than 5 km/h, the damping force D of each of the front fork 20 and the rear suspension 30 is kept to be the third value D3 and is not reduced to the first value D1. Even when the engine 6 is stopped while the motorcycle 1 is traveling, as long as the motorcycle 1 is traveling at a higher speed than 5 km/h, the expansion operation and the contraction operation of each of the front fork 20 and the rear suspension 30 does not become soft. Therefore, even when the engine 6 is stopped while the motorcycle 1 is traveling, the posture of the motorcycle 1 can be stably kept until the vehicle speed is reduced to be equal to or lower than 5 km/h. Reduction of riding comfort can be suppressed.

According to this embodiment, when the main switch 64 is on, the vehicle speed is higher than 5 km/h and equal to or lower than 15 km/h, and the engine 6 is running, the control device 60 controls the damping force D of each of the front fork 20 and he rear suspension 30 such that the damping force D is the fourth value D4. According to this embodiment, it is possible to prevent the damping force D of each of the front fork 20 and the rear suspension 30 from being small when the vehicle speed is equal to or lower than 15 km/h in middle of deceleration before traveling is stopped (for example, immediately before stopping because of a red light). The rider can cause the motorcycle 1 to stably travel in the middle of deceleration before the motorcycle stops.

According to this embodiment, when the main switch 64 is on, the vehicle speed is higher than 15 km/h, and the engine 6 is running, the control device 60 controls the damping force D of each of the front fork 20 and the rear suspension 30 such that the damping force D is the fifth value D5. Thus, when the motorcycle 1 is traveling at a higher speed than 15 km/h, the damping force D of each of the front fork 20 and the rear suspension 30 is smaller than that when the motorcycle 1 is traveling at a speed equal to or lower than 15 km/h. When the motorcycle 1 is traveling at a relatively high speed, characteristics of the front fork 20 and the rear suspension 30 in the expansion direction and the contraction direction are relatively soft. Therefore, when the motorcycle 1 is traveling at a relatively high speed, impact received from a road surface is more easily absorbed and riding comfort is increased.

The front fork 20 may be configured such that, when power is supplied thereto, only one of the damping force of the front fork 20 when expanding and the damping force of the front fork 20 when contracting is reduced, as compared to that when power is not supplied. However, according to this embodiment, when power is supplied to the front fork 20, both the damping forces of the front fork 20 when expanding and when contracting are reduced. Therefore, an operation of changing the posture of the motorcycle 1 from an inclined posture to a vertical posture and an operation of pushing or pulling the motorcycle 1 can be more easily performed.

The rear suspension 30 may be configured such that, when power is supplied thereto, only one of the damping force of the rear suspension 30 when expanding and the damping force of the rear suspension 30 when contracting is reduced, as compared to that when power is not supplied. However, according to this embodiment, when power is supplied to the rear suspension 30, both the damping forces of the rear suspension 30 when expanding and when contracting are reduced. Therefore, the operation of changing the posture of the motorcycle 1 from an inclined posture to a vertical posture and the operation of pushing or pulling the motorcycle 1 can be more easily performed.

One embodiment has been described above, but the above-described embodiment is merely an example. Various other embodiments are also possible.

In the above-described embodiment, the control device 60 controls both the damping forces of the front fork 20 and the rear suspension 30, but the control device 60 can be configured to control only one of the damping forces. For example, in this embodiment, upon turning on the main switch 64, when the vehicle speed is equal to or lower than 5 km/h and the engine 6 is not running, both the damping forces of the front fork 20 and the rear suspension 30 are reduced. However, when the main switch 64 is on, the vehicle speed is equal to or lower than 5 km/h, and the engine 6 is not running, the damping force of only one of the front fork 20 and the rear suspension 30 may be reduced.

The front fork 20 is an example of an electronically controlled front suspension, but the front suspension is not limited to the front fork 20. The front suspension is not limited to a front suspension including a telescopic type mechanism, but may be a front suspension including a telelever type mechanism.

The straddled vehicle is a vehicle that a rider straddles to ride. The straddled vehicle is not limited to the motorcycle 1. The straddled vehicle may be, for example, a motor tricycle, an all-terrain vehicle (ATV), a snowmobile, or the like.

The terms and expressions used herein are for description only and are not to be interpreted in a limited sense. The present teaching may be embodied in many various forms. This disclosure should be regarded as providing preferred embodiments of the principle of the present teaching. The invention being defined by the claims.

### DESCRIPTION OF REFERENCE SIGNS

1 motorcycle (straddled vehicle),
6 internal combustion engine (traveling drive device),
8 front wheel (wheel),
9 rear wheel (wheel),
10 vehicle body frame,
20 front fork (electronically controlled suspension),
30 rear suspension (electronically controlled suspension),
60 control device,
62 battery (power source),
64 main switch,
66 vehicle speed sensor (vehicle speed detection device),
68 operation detection device,
68a rotational speed sensor

## Claims

1. A straddled vehicle (1) comprising:
a vehicle body frame (10);
a traveling drive device (6) supported by the vehicle body frame (10);
at least one wheel (8, 9) supported by the vehicle body frame (10);
an electronically controlled suspension (20, 30) provided between the vehicle body frame (10) and the wheel (8, 9);
a power source (62) configured to supply power;
a main switch (64) configured to turn on and off supply of power of the power source (62);
a vehicle speed detection device (66) configured to detect a vehicle speed;
an operation detection device (68) configured to detect whether the traveling drive device (6) is running; and
a control device (60) configured to control a damping force of the electronically controlled suspension (20, 30),
**characterised by** the control device (60) being configured to
when the main switch (64) is on, the vehicle speed detected by the vehicle speed detection device (66) is equal to or lower than a preset first threshold, and the operation detection device (68) detects that the traveling drive device (6) is not running, control the damping force of the electronically controlled suspension (20, 30) by supplying power to the electronically controlled suspension (20, 30) such that the damping force is a first value, and
when the main switch (64) is on, the vehicle speed detected by the vehicle speed detection device (66) is equal to or lower than the first threshold, and the operation detection device (68) detects that the traveling drive device (6) is running, control the damping force of the electronically controlled suspension (20, 30) such that the damping force is a second value that is larger than the first value.

2. The straddled vehicle (1) according to claim 1, wherein the control device (60) is configured to, when the main switch (64) is on, the vehicle speed detected by the vehicle speed detection device (66) is larger than the first threshold, and the operation detection device (68) detects that the traveling drive device (6) is not running, control the damping force of the electronically controlled suspension (20, 30) such that the damping force is a third value that is larger than the first value.

3. The straddled vehicle (1) according to claim 2, wherein the third value is larger than the second value.

4. The straddled vehicle (1) according to any one of claims 1 to 3, wherein the control device (60) is configured to, when the main switch (64) is on, the vehicle speed detected by the vehicle speed detection device (66) is larger than the first threshold and is equal to or lower than a second threshold that is larger than the first threshold, and the operation detection device (68) detects that the traveling drive device (6) is running, control the damping force of the electronically controlled suspension (20, 30) such that the damping force is a fourth value that is larger than the first value.

5. The straddled vehicle (1) according to claim 4, wherein the fourth value is set to decrease as the vehicle speed increases in a range in which the vehicle speed detected by the vehicle speed detection device (66) is larger than the first threshold and is equal to or lower than the second threshold.

6. The straddled vehicle (1) according to claim 4 or 5, wherein the third value is larger than the fourth value.

7. The straddled vehicle (1) according to any one of claims 4 to 6, wherein the control device (60) is configured to, when the main switch (64) is on, the vehicle speed detected by the vehicle speed detection device (66) is larger than the second threshold, and the operation detection device (68) detects that the traveling drive device (6) is running, control the damping force of the electronically controlled suspension (20, 30) such that the damping force is a fifth value that is smaller than the fourth value.

8. The straddled vehicle (1) according to any one of claims 1 to 7, wherein the first threshold is a speed of 0 to 10 km/h.

9. The straddled vehicle (1) according to any one of claims 4 to 7, wherein the second threshold is a speed of 10 to 20 km/h.

10. The straddled vehicle (1) according to any one of claims 1 to 9, wherein the traveling drive device is an internal combustion engine (6), and
the operation detection device (68) includes a rotational speed sensor (68a) that detects rotational a speed of the internal combustion engine (6).

11. The straddled vehicle (1) according to any one of claims 1 to 10, wherein
the wheel is a front wheel (8),
the electronically controlled suspension is an electronically controlled front suspension (20),
the front suspension (20) is configured to apply a first damping force when expanding with power supplied thereto and a second damping force when expanding with no power supplied thereto, the first damping force being smaller than the second damping force, and
the front suspension (20) is configured to apply a third damping force when contracting with power supplied thereto and a fourth damping force when contracting with no power supplied thereto, the third damping force being smaller than the fourth damping force.

12. The straddled vehicle (1) according to any one of claims 1 to 10, wherein
the wheel is a rear wheel (9),
the electronically controlled suspension is an electronically controlled rear suspension (30),
the rear suspension (30) is configured to apply a first damping force when expanding with power supplied thereto and a second damping force when expanding with no power supplied thereto, the first damping force being smaller than the second damping force, and
the rear suspension (30) is configured to apply a third damping force when contracting with power supplied thereto and a fourth damping force when contracting with no power supplied thereto, the third damping force being smaller than the fourth damping force.

13. A method for controlling a damping force applied by an electronically controlled suspension (20, 30) of a straddled vehicle (1) having a vehicle body frame (10), a traveling drive device (6) supported by the vehicle body frame (10), at least one wheel (8, 9) supported by the vehicle body frame (10), a power source (62) configured to supply power, a main switch (64) configured to turns on and off supply of power of the power source (62), a vehicle speed detection device (66) configured to detect a vehicle speed, and an operation detection device (68) configured to detect whether the traveling drive device (6) is running, the electronically controlled suspension (20, 30) is provided between the vehicle body frame (10) and the wheel (8, 9);
the method comprises:
when the main switch (64) is on, the vehicle speed detected by the vehicle speed detection device (66) is equal to or lower than a preset first threshold, and the operation detection device (68) detects that the traveling drive device (6) is not running, controlling the damping force of the electronically controlled suspension (20, 30) by supplying power to the electronically controlled suspension (20, 30) such that the damping force is a first value, and
when the main switch (64) is on, the vehicle speed detected by the vehicle speed detection device (66) is equal to or lower than the first threshold, and the operation detection device (68) detects that the traveling drive device (6) is running, controlling the damping force of the electronically controlled suspension (20, 30) such that the damping force is a second value that is larger than the first value.

14. The method for controlling a damping force according to claim 13, wherein, when the main switch (64) is on, the vehicle speed detected by the vehicle speed detection device (66) is larger than the first threshold, and the operation detection device (68) detects that the traveling drive device (6) is not running, controlling the damping force of the electronically controlled suspension (20, 30) such that the damping force is a third value that is larger than the first value.

15. The method for controlling a damping force according to claim 14, wherein the third value is larger than the second value.

## Patentansprüche

1. Ein Spreiz-Sitz-Fahrzeug (1), das umfasst:
einen Fahrzeugkörperrahmen (10);
eine Fahrantriebsvorrichtung (6), die von dem Fahrzeugkörperrahmen (10) getragen wird;
zumindest ein Rad (8, 9), das von dem Fahrzeugkörperrahmen (10) getragen wird;
eine elektronisch gesteuerte Aufhängung (20, 30), die zwischen dem Fahrzeugkörperrahmen (10) und dem Rad (8, 9) vorgesehen ist;
eine Energiequelle (62), die konfiguriert ist, um Energie zu liefern;
einen Hauptschalter (64), der konfiguriert ist, um Zuführung der Energie der Energiequelle (62) ein und aus zuschaltet;
eine Fahrzeuggeschwindigkeitserfassungsvorrichtung (66), die konfiguriert ist, um eine Fahrzeuggeschwindigkeit zu erfassen;
eine Betriebserfassungsvorrichtung (68), die konfiguriert ist, um zu erfassen, ob die Fahrantriebsvorrichtung (6) in Betrieb ist; und
eine Steuervorrichtung (60), die konfiguriert ist, um eine Dämpfungskraft der elektronisch gesteuerten Aufhängung (20, 30) zu steuern,
**gekennzeichnet durch**
die Steuereinrichtung (60), die konfiguriert ist, um
wenn der Hauptschalter (64) eingeschaltet ist, die Fahrzeuggeschwindigkeit, die von der Fahrzeuggeschwindigkeitserfassungsvorrichtung (66) erfasst ist, gleich oder kleiner als ein voreingestellter erster Schwellenwert ist, und die Betriebserfassungsvorrichtung (68) erfasst, dass die Fahrantriebsvorrichtung (6) nicht läuft, die Dämpfungskraft der elektronisch gesteuerten Aufhängung (20, 30) durch Zuführen von Energie zu der elektronisch gesteuerten Aufhängung (20, 30) zu steuern, so dass die Dämpfungskraft ein erster Wert ist, und
wenn der Hauptschalter (64) eingeschaltet ist, die Fahrzeuggeschwindigkeit, die von der Fahrzeuggeschwindigkeitserfassungsvorrichtung (66) erfasst ist, gleich oder kleiner als der erste Schwellenwert ist und die Betriebserfassungsvorrichtung (68) erfasst, dass die Fahrantriebsvorrichtung (6) läuft, die Dämpfungskraft der elektronisch gesteuerten Aufhängung (20, 30) zu steuern, dass die Dämpfungskraft ein zweiter Wert ist, der größer als der erste Wert ist.

2. Das Spreiz-Sitz-Fahrzeug (1) gemäß Anspruch 1, wobei die Steuervorrichtung (60) konfiguriert ist, um, wenn der Hauptschalter (64) eingeschaltet ist, die Fahrzeuggeschwindigkeit, die von der Fahrzeuggeschwindigkeitserfassungsvorrichtung (66) erfasst ist, größer als der erste Schwellenwert ist und die Betriebserfassungsvorrichtung (68) erfasst, dass die Fahrantriebsvorrichtung (6) nicht läuft, die Dämpfungskraft der elektronisch gesteuerten Aufhängung (20, 30) steuert, so dass die Dämpfungskraft ein dritter Wert ist, der größer als der erste Wert ist.

3. Das Spreiz-Sitz-Fahrzeug (1) gemäß Anspruch 2, wobei der dritte Wert größer als der zweite Wert ist.

4. Das Spreiz-Sitz-Fahrzeug (1) gemäß irgendeinem der Ansprüche 1 bis 3, wobei die Steuereinrichtung (60) konfiguriert ist, um, wenn der Hauptschalter (64) eingeschaltet ist, die Fahrzeuggeschwindigkeit, die von der Fahrzeuggeschwindigkeits-Erfassungseinrichtung (66) erfasst ist, größer als der erste Schwellenwert ist und gleich oder kleiner als ein zweiter Schwellenwert ist, der größer als der erste Schwellenwert ist, und die Betriebserfassungsvorrichtung (68) erfasst, dass die Fahrantriebsvorrichtung (6) läuft, die Dämpfungskraft der elektronisch gesteuerten Aufhängung (20, 30) zu steuern, so dass die Dämpfungskraft ein vierter Wert ist, der größer als der erste Wert ist.

5. Das Spreiz-Sitz-Fahrzeug (1) gemäß Anspruch 4, wobei der vierte Wert gesetzt ist, um abzunehmen, wenn die Fahrzeuggeschwindigkeit in einem Bereich zunimmt, in dem die Fahrzeuggeschwindigkeit, die von der Fahrzeuggeschwindigkeitserfassungsvorrichtung (66) erfasst ist, größer als der erste Schwellenwert und gleich oder kleiner als der zweite Schwellenwert ist.

6. Das Spreiz-Sitz-Fahrzeug (1) gemäß Anspruch 4 oder 5, wobei der dritte Wert größer als der vierte Wert ist.

7. Das Spreiz-Sitz-Fahrzeug (1) gemäß irgendeinem der Ansprüche 4 bis 6, wobei die Steuervorrichtung (60) konfiguriert ist, um, wenn der Hauptschalter (64) eingeschaltet ist, die Fahrzeuggeschwindigkeit, die von der Fahrzeuggeschwindigkeitserfassungsvorrichtung (66) erfasst ist, größer als der zweite Schwellenwert ist und die Betriebserfassungsvorrichtung (68) erfasst, dass die Fahrantriebsvorrichtung (6) läuft, die Dämpfungskraft der elektronisch gesteuerten Aufhängung (20, 30) steuert, so dass die Dämpfungskraft ein fünfter Wert ist, der kleiner als der vierte Wert ist.

8. Das Spreiz-Sitz-Fahrzeug (1) gemäß irgendeinem der Ansprüche 1 bis 7, wobei der erste Schwellenwert eine Geschwindigkeit von 0 bis 10 km/h ist.

9. Das Spreiz-Sitz-Fahrzeug (1) gemäß irgendeinem der Ansprüche 4 bis 7, wobei der zweite Schwellenwert eine Geschwindigkeit von 10 bis 20 km/h ist.

10. Das Spreiz-Sitz-Fahrzeug (1) gemäß irgendeinem der Ansprüche 1 bis 9, wobei die Fahrantriebseinrichtung ein Verbrennungsmotor (6) ist, und
die Betriebserfassungsvorrichtung (68) einen Drehzahlsensor (68a) enthält, der die Drehzahl des Verbrennungsmotors (6) erfasst.

11. Das Spreiz-Sitz-Fahrzeug (1) gemäß irgendeinem der Ansprüche 1 bis 10, wobei das Rad ist ein Vorderrad (8),
die elektronisch gesteuerte Aufhängung eine elektronisch gesteuerte vordere Aufhängung (20) ist,
die vordere Aufhängung (20) konfiguriert ist, um eine erste Dämpfungskraft aufzubringen, wenn sie sich mit zugeführter Energie ausdehnt, und eine zweite Dämpfungskraft aufzubringen, wenn sie sich ohne zugeführte Energie ausdehnt, wobei die erste Dämpfungskraft kleiner als die zweite Dämpfungskraft ist, und
die vordere Aufhängung (20) konfiguriert ist, um eine dritte Dämpfungskraft aufzubringen, wenn sie sich mit der ihr zugeführten Energie zusammenzieht, und eine vierte Dämpfungskraft aufzubringen, wenn sie sich ohne die ihr zugeführte Energie zusammenzieht, wobei die dritte Dämpfungskraft kleiner als die vierte Dämpfungskraft ist.

12. Das Spreiz-Sitz-Fahrzeug (1) gemäß irgendeinem der Ansprüche 1 bis 10, wobei
das Rad ist ein Hinterrad (9),
die elektronisch gesteuerte Aufhängung ist eine elektronisch gesteuerte hintere Aufhängung (30),
die hintere Aufhängung (30) konfiguriert ist, um eine erste Dämpfungskraft um eine erste Dämpfungskraft aufzubringen, wenn sie sich mit zugeführter Energie ausdehnt, und eine zweite Dämpfungskraft aufzubringen, wenn sie sich ohne zugeführte Energie ausdehnt, wobei die erste Dämpfungskraft kleiner als die zweite Dämpfungskraft ist, und
die hintere Aufhängung (30) konfiguriert ist, um eine dritte Dämpfungskraft aufzubringen, wenn sie sich mit der ihr zugeführten Energie zusammenzieht, und eine vierte Dämpfungskraft aufzubringen, wenn sie sich ohne die ihr zugeführte Energie zusammenzieht, wobei die dritte Dämpfungskraft kleiner als die vierte Dämpfungskraft ist.

13. Ein Verfahren zum Steuern einer Dämpfungskraft, die von einer elektronisch gesteuerten Aufhängung (20, 30) eines Spreiz-Sitz-Fahrzeugs (1) aufgebracht wird, das einen Fahrzeugkörperrahmenrahmen (10), eine Fahrantriebsvorrichtung (6), die von dem Fahrzeugkörperrahmenrahmen (10) getragen wird, zumindest ein Rad (8, 9), das von dem Fahrzeugkörperrahmenrahmen (10) getragen wird, eine Energiequelle (62), die konfiguriert ist, um Energie zu liefern, einen Hauptschalter (64), der konfiguriert ist, um die Energieversorgung der Energiequelle (62) ein und aus zuschaltet, eine Fahrzeuggeschwindigkeitserfassungsvorrichtung (66), die konfiguriert ist, um eine Fahrzeuggeschwindigkeit zu erfassen, und eine Betriebserfassungsvorrichtung (68), die konfiguriert ist, zu erfassen, ob die Fahrantriebsvorrichtung (6) läuft, wobei die elektronisch gesteuerte Aufhängung (20, 30) zwischen dem Fahrzeugkörperrahmenrahmen (10) und dem Rad (8, 9) vorgesehen ist, hat;
das Verfahren umfasst:
wenn der Hauptschalter (64) eingeschaltet ist, die Fahrzeuggeschwindigkeit, die von der Fahrzeuggeschwindigkeitserfassungsvorrichtung (66) erfasst ist, gleich oder niedriger als ein voreingestellter erster Schwellenwert ist und die Betriebserfassungsvorrichtung (68) erfasst, dass die Fahrantriebsvorrichtung (6) nicht läuft, die Dämpfungskraft der elektronisch gesteuerten Aufhängung (20, 30) durch Zuführen von Energie zu der elektronisch gesteuerten Aufhängung (20, 30) gesteuert wird, so dass die Dämpfungskraft ein erster Wert ist, und
wenn der Hauptschalter (64) eingeschaltet ist, die Fahrzeuggeschwindigkeit, die von der Fahrzeuggeschwindigkeitserfassungsvorrichtung (66) erfasst ist, gleich oder kleiner als der erste Schwellenwert ist und die Betriebserfassungsvorrichtung (68) erfasst, dass die Fahrantriebsvorrichtung (6) läuft, die Dämpfungskraft der elektronisch gesteuerten Aufhängung (20, 30) gesteuert wird, so dass die Dämpfungskraft ein zweiter Wert ist, der größer als der erste Wert ist.

14. Das Verfahren zum Steuern einer Dämpfungskraft gemäß Anspruch 13, wobei, wenn der Hauptschalter (64) eingeschaltet ist, die Fahrzeuggeschwindigkeit, die von der Fahrzeuggeschwindigkeitserfassungsvorrichtung (66) erfasst ist, größer als der erste Schwellenwert ist und die Betriebserfassungsvorrichtung (68) erfasst, dass die Fahrantriebsvorrichtung (6) nicht läuft, die Dämpfungskraft der elektronisch gesteuerten Aufhängung (20, 30) gesteuert wird, so dass die Dämpfungskraft ein dritter Wert ist, der größer als der erste Wert ist.

15. Das Verfahren zur Steuerung einer Dämpfungskraft gemäß Anspruch 14, wobei der dritte Wert größer als der zweite Wert ist.

## Revendications

1. Véhicule à selle (1) comprenant :
un châssis de corps de véhicule (10) ;
un dispositif d'entraînement de déplacement (6) supporté par le châssis de corps de véhicule (10) ;
au moins une roue (8, 9) supportée par le châssis de corps de véhicule (10) ;
une suspension commandée électroniquement (20, 30) prévue entre le châssis de corps de véhicule (10) et la roue (8, 9) ;
une source de puissance (62) configurée pour fournir de la puissance ;
un commutateur principal (64) configuré pour activer et désactiver la fourniture de puissance de la source de puissance (62) ;
un dispositif de détection de vitesse de véhicule (66) configuré pour détecter une vitesse de véhicule ;
un dispositif de détection de fonctionnement (68) configuré pour détecter si le dispositif d'entraînement de déplacement (6) est en fonctionnement ou non ; et
un dispositif de commande (60) configuré pour commander une force d'amortissement de la suspension commandée électroniquement (20, 30),
**caractérisé en ce que** :
le dispositif de commande (60) est configuré pour :
lorsque le commutateur principal (64) est activé, que la vitesse de véhicule détectée par le dispositif de détection de vitesse de véhicule (66) est égale ou inférieure à un premier seuil prédéfini et que le dispositif de détection de fonctionnement (68) détecte que le dispositif d'entraînement de déplacement (6) n'est pas en fonctionnement, commander la force d'amortissement de la suspension commandée électroniquement (20, 30) en fournissant de la puissance à la suspension commandée électroniquement (20, 30) de telle sorte que la force d'amortissement soit à une première valeur ; et
lorsque le commutateur principal (64) est activé, que la vitesse de véhicule détectée par le dispositif de détection de vitesse de véhicule (66) est égale ou inférieure au premier seuil et que le dispositif de détection de fonctionnement (68) détecte que le dispositif d'entraînement de déplacement (6) est en fonctionnement, commander la force d'amortissement de la suspension commandée électroniquement (20, 30) de telle sorte que la force d'amortissement soit à une deuxième valeur qui est plus grande que la première valeur.

2. Véhicule à selle (1) selon la revendication 1, dans lequel le dispositif de commande (60) est configuré pour, lorsque le commutateur principal (64) est activé, que la vitesse de véhicule détectée par le dispositif de détection de vitesse de véhicule (66) est plus grande que le premier seuil et que le dispositif de détection de fonctionnement (68) détecte que le dispositif d'entraînement de déplacement (6) n'est pas en fonctionnement, commander la force d'amortissement de la suspension commandée électroniquement (20, 30) de telle sorte que la force d'amortissement soit à une troisième valeur qui est plus grande que la première valeur.

3. Véhicule à selle (1) selon la revendication 2, dans lequel la troisième valeur est plus grande que la deuxième valeur.

4. Véhicule à selle (1) selon l'une quelconque des revendications 1 à 3, dans lequel le dispositif de commande (60) est configuré pour, lorsque le commutateur principal (64) est activé, que la vitesse de véhicule détectée par le dispositif de détection de vitesse de véhicule (66) est plus grande que le premier seuil et est égale ou inférieure à un second seuil qui est plus grand que le premier seuil et que le dispositif de détection de fonctionnement (68) détecte que le dispositif d'entraînement de déplacement (6) est en fonctionnement, commander la force d'amortissement de la suspension commandée électroniquement (20, 30) de telle sorte que la force d'amortissement soit à une quatrième valeur qui est plus grande que la première valeur.

5. Véhicule à selle (1) selon la revendication 4, dans lequel la quatrième valeur est définie de telle sorte qu'elle diminue lorsque la vitesse de véhicule augmente dans une plage dans laquelle la vitesse de véhicule détectée par le dispositif de détection de vitesse de véhicule (66) est plus grande que le premier seuil et est égale ou inférieure au second seuil.

6. Véhicule à selle (1) selon la revendication 4 ou 5, dans lequel la troisième valeur est plus grande que la quatrième valeur.

7. Véhicule à selle (1) selon l'une quelconque des revendications 4 à 6, dans lequel le dispositif de commande (60) est configuré pour, lorsque le commutateur principal (64) est activé, que la vitesse de véhicule détectée par le dispositif de détection de vitesse de véhicule (66) est plus grande que le second seuil et que le dispositif de détection de fonctionnement (68) détecte que le dispositif d'entraînement de déplacement (6) est en fonctionnement, commander la force d'amortissement de la suspension commandée électroniquement (20, 30) de telle sorte que la force d'amortissement soit à une cinquième valeur qui est plus petite que la quatrième valeur.

8. Véhicule à selle (1) selon l'une quelconque des revendications 1 à 7, dans lequel le premier seuil est une vitesse de 0 à 10 km/h.

9. Véhicule à selle (1) selon l'une quelconque des revendications 4 à 7, dans lequel le second seuil est une vitesse de 10 à 20 km/h.

10. Véhicule à selle (1) selon l'une quelconque des revendications 1 à 9, dans lequel :
le dispositif d'entraînement de déplacement est un moteur à combustion interne (6) ; et
le dispositif de détection de fonctionnement (68) inclut un capteur de vitesse de rotation (68a) qui détecte une vitesse de rotation du moteur à combustion interne (6).

11. Véhicule à selle (1) selon l'une quelconque des revendications 1 à 10, dans lequel :
la roue est une roue avant (8) ;
la suspension commandée électroniquement est une suspension avant commandée électroniquement (20) ;
la suspension avant (20) est configurée pour appliquer une première force d'amortissement lorsqu'elle se détend du fait de la puissance qui lui est fournie et une deuxième force d'amortissement lorsqu'elle se détend en l'absence de fourniture de puissance, la première force d'amortissement étant plus petite que la deuxième force d'amortissement ; et
la suspension avant (20) est configurée pour appliquer une troisième force d'amortissement lorsqu'elle se contracte du fait de la puissance qui lui est fournie et une quatrième force d'amortissement lorsqu'elle se contracte en l'absence de fourniture de puissance, la troisième force d'amortissement étant plus petite que la quatrième force d'amortissement.

12. Véhicule à selle (1) selon l'une quelconque des revendications 1 à 10, dans lequel :
la roue est une roue arrière (9) ;
la suspension commandée électroniquement est une suspension arrière commandée électroniquement (30) ;
la suspension arrière (30) est configurée pour appliquer une première force d'amortissement lorsqu'elle se détend du fait de la puissance qui lui est fournie et une deuxième force d'amortissement lorsqu'elle se détend en l'absence de fourniture de puissance, la première force d'amortissement étant plus petite que la deuxième force d'amortissement ; et
la suspension arrière (30) est configurée pour appliquer une troisième force d'amortissement lorsqu'elle se contracte du fait de la puissance qui lui est fournie et une quatrième force d'amortissement lorsqu'elle se contracte en l'absence de fourniture de puissance, la troisième force d'amortissement étant plus petite que la quatrième force d'amortissement.

13. Procédé pour commander une force d'amortissement appliquée par une suspension commandée électroniquement (20, 30) d'un véhicule à selle (1) comportant un châssis de corps de véhicule (10), un dispositif d'entraînement de déplacement (6) supporté par le châssis de corps de véhicule (10), au moins une roue (8, 9) supportée par le châssis de corps de véhicule (10), une source de puissance (62) configurée pour fournir de la puissance, un commutateur principal (64) configuré pour activer et désactiver la fourniture de puissance de la source de puissance (62), un dispositif de détection de vitesse de véhicule (66) configuré pour détecter une vitesse de véhicule et un dispositif de détection de fonctionnement (68) configuré pour détecter si le dispositif d'entraînement de déplacement (6) est en fonctionnement ou non, la suspension commandée électroniquement (20, 30) est prévue entre le châssis de corps de véhicule (10) et la roue (8, 9) ;
le procédé comprend :
lorsque le commutateur principal (64) est activé, que la vitesse de véhicule détectée par le dispositif de détection de vitesse de véhicule (66) est égale ou inférieure à un premier seuil prédéfini et que le dispositif de détection de fonctionnement (68) détecte que le dispositif d'entraînement de déplacement (6) n'est pas en fonctionnement, la commande de la force d'amortissement de la suspension commandée électroniquement (20, 30) en fournissant de la puissance à la suspension commandée électroniquement (20, 30) de telle sorte que la force d'amortissement soit à une première valeur ; et
lorsque le commutateur principal (64) est activé, que la vitesse de véhicule détectée par le dispositif de détection de vitesse de véhicule (66) est égale ou inférieure au premier seuil et que le dispositif de détection de fonctionnement (68) détecte que le dispositif d'entraînement de déplacement (6) est en fonctionnement, la commande de la force d'amortissement de la suspension commandée électroniquement (20, 30) de telle sorte que la force d'amortissement soit à une deuxième valeur qui est plus grande que la première valeur.

14. Procédé pour commander une force d'amortissement selon la revendication 13, comprenant, lorsque le commutateur principal (64) est activé, que la vitesse de véhicule détectée par le dispositif de détection de vitesse de véhicule (66) est plus grande que le premier seuil et que le dispositif de détection de fonctionnement (68) détecte que le dispositif d'entraînement de déplacement (6) n'est pas en fonctionnement, la commande de la force d'amortissement de la suspension commandée électroniquement (20, 30) de telle sorte que la force d'amortissement soit à une troisième valeur qui est plus grande que la première valeur.

15. Procédé pour commander une force d'amortissement selon la revendication 14, dans lequel la troisième valeur est plus grande que la deuxième valeur.
